(19) Europäisches Patentamt
European Patent Office
Office européen des brevets

(11) EP 4 597 619 A1

(12) EUROPEAN PATENT APPLICATION
published in accordance with Art. 153(4) EPC

(43) Date of publication:
**06.08.2025 Bulletin 2025/32**

(21) Application number: **23871940.5**

(22) Date of filing: **13.09.2023**

(51) International Patent Classification (IPC):
***H01M 4/38*** *(2006.01)* ***H01M 4/36*** *(2006.01)*

(52) Cooperative Patent Classification (CPC):
**H01M 4/36; H01M 4/38;** Y02E 60/10

(86) International application number:
**PCT/JP2023/033412**

(87) International publication number:
**WO 2024/070707 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 JP 2022156791**

(71) Applicant: **Panasonic Intellectual Property Management Co., Ltd.**
**Kadoma-shi, Osaka 571-0057 (JP)**

(72) Inventors:
- **SATO, Shin**
  **Kadoma-shi, Osaka 571-0057 (JP)**
- **SATO, Yosuke**
  **Kadoma-shi, Osaka 571-0057 (JP)**
- **SAKATA, Motohiro**
  **Kadoma-shi, Osaka 571-0057 (JP)**

(74) Representative: **Eisenführ Speiser**
**Patentanwälte Rechtsanwälte PartGmbB**
**Postfach 10 60 78**
**28060 Bremen (DE)**

# (54) NEGATIVE-ELECTRODE MATERIAL FOR SECONDARY BATTERY, AND SECONDARY BATTERY

(57) A negative electrode material for secondary battery use includes silicon-containing particles and coating layers covering at least part of the surfaces of the silicon-containing particles. The silicon-containing particles each include an ion conductive phase and silicon phases dispersed in the ion conductive phase. The coating layers contain at least one phosphate compound selected from the group consisting of a phosphate compound, a polyphosphate compound, and a metaphosphate compound, each of which contains an anion represented by general formula (1):

[Chemical Formula 1]

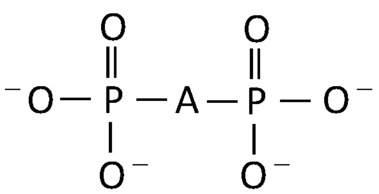

or

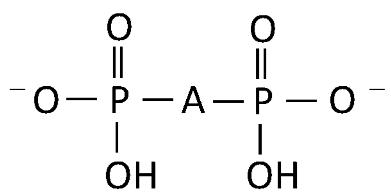

(1)

In general formula (1), A represents an organic group or an oxygen atom.

EP 4 597 619 A1

FIG. 1

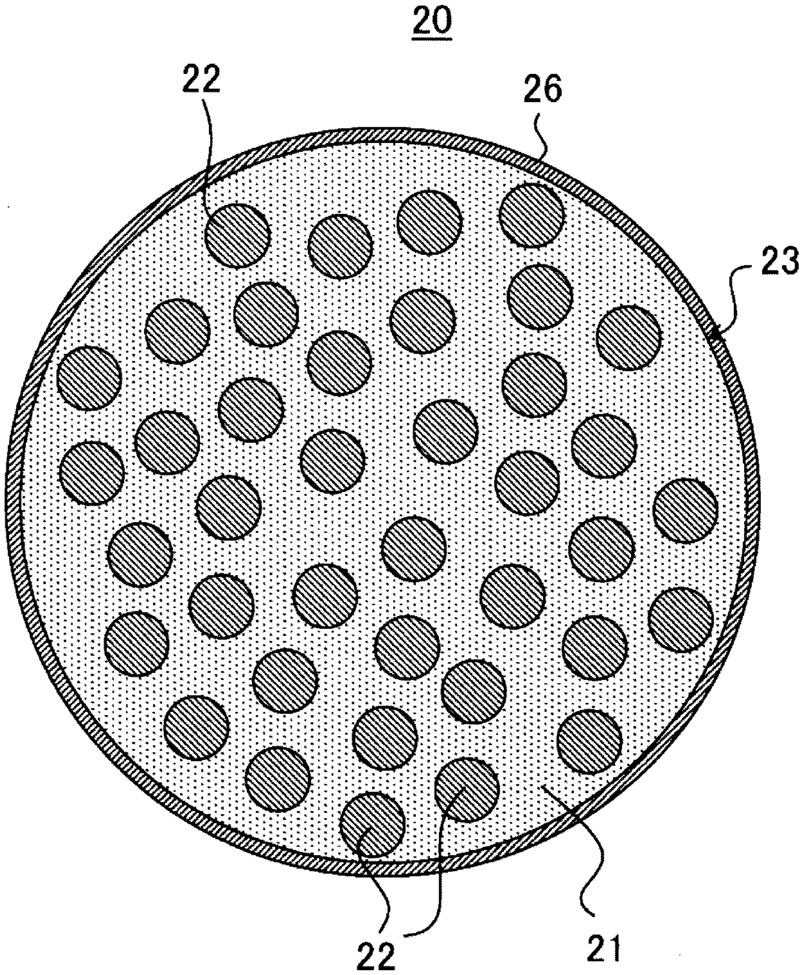

## Description

[Technical Field]

The present disclosure relates to a negative electrode material for secondary battery use and a secondary battery.

[Background Art]

Secondary batteries typified by lithium-ion secondary batteries are used, for example, as power sources for electronic devices such as portable terminals, and power sources for vehicles such as electric vehicles. For negative electrodes of the secondary batteries, a negative electrode active material capable of absorbing and releasing lithium ions is used, and graphite is typically used as such a negative electrode active material.

In recent years, investigations are being conducted on negative electrode active materials containing silicon, which has a higher capacity density than graphite. For example, composite particles each including a silicate phase and silicon phases dispersed within the silicate phase are being investigated.

Patent Literature 1 proposes a negative electrode active substance for a secondary battery that includes silicate phases containing Li, Si, and Mx (Mx: an element other than an alkaline metal, an alkaline earth metal, and Si), silicon particles dispersed in the silicate phases, and metal particles dispersed in the silicate phases, the metal particles containing one or more metals or alloys selected from Fe, Cr, Ni, Mn, Cu, Mo, Zn, and Al as a main component, wherein the percentage content of each element, relative to the sum of the elements other than oxygen in the silicate phases, is 3 to 45 mol % for Li, 40 to 78 mol % for Si, and 1 to 40 mol % for Mx.

Patent Literature 2 proposes a negative electrode active substance for a secondary battery that includes silicate phases containing Li, Si, and Mx (Mx: an element other than an alkaline metal, an alkaline earth metal, and Si), silicon particles dispersed in the silicate phases, and oxide particles dispersed in the silicate phases, the oxide particles including at least one type of oxide particles containing Zr, oxide particles containing Ce, oxide particles containing Ca, oxide particles containing Al, oxide particles containing Fe, oxide particles containing Mg, oxide particles containing Ti, and oxide particles containing W, wherein the percentage content of each element, relative to the sum of the elements other than oxygen in the silicate phases is 3 to 45 mol % for Li, 40 to 78 mol % for Si, and 1 to 40 mol % for Mx.

[Citation List]

[Patent Literature]

[Patent Literature 1] International Publication No. WO2019/151016
[Patent Literature 2] International Publication No. WO2019/151026

[Summary of Invention]

[Technical Problem]

The silicate phases of composite particles tend to progressively erode due to side reactions in a battery including an electrolyte. Erosion degrades the composite particles and lowers cycle characteristics of the battery.

The negative electrode active materials disclosed in Patent Literatures 1 and 2 can inhibit particle fracture due to silicon expansion and contraction during charging and discharging to some extent. However, inhibition of the side reactions is still insufficient.

[Solution to Problem]

In view of the foregoing, an aspect of the present disclosure relates to a negative electrode material for secondary battery use, including: silicon-containing particles; and coating layers covering at least part of surfaces of the silicon-containing particles, wherein the silicon-containing particles each include an ion conductive phase and silicon phases dispersed in the ion conductive phase, and the coating layers contains at least one phosphate compound selected from the group consisting of a phosphate compound, a polyphosphate compound, and a metaphosphate compound, each of which contains an anion represented by general formula (1):

[Chemical Formula 1]

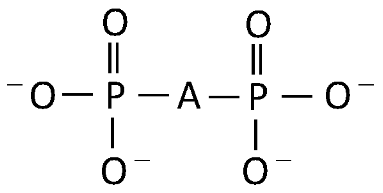

or

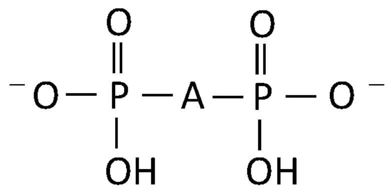

(1)

,

In the general formula (1), A is an organic group or an oxygen atom.

Another aspect of present disclosure relates to a secondary battery including: a positive electrode; a negative electrode; and an electrolyte, wherein the negative electrode contains the aforementioned negative electrode material for secondary battery use.

[Advantageous Effects of Invention]

According to the present disclosure, it is possible to suppress degradation of the cycle characteristics of secondary batteries.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] FIG. 1 is a schematic cross-sectional view of a negative electrode material for secondary battery use according to an embodiment of the present disclosure.

[FIG. 2] FIG. 2 is a schematic perspective view with a partial cutaway of a secondary battery according to an embodiment of the present disclosure.

[Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be replaced with "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one kind of them may be selected and used singly, or two or more types of them may be used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

(Negative Electrode Material for Secondary Battery Use)

A negative electrode material for secondary battery use according to an embodiment of the present disclosure includes silicon-containing particles (Si-based active material) and coating layers covering at least part of the surfaces of the silicon-containing particles. The silicon-containing particles each include an ion conductive phase and silicon phases dispersed in the ion conductive phase. Hereinafter, the silicon-containing particles may be also referred to as "composite particles".

The coating layers contain at least one phosphate compound selected from the group consisting of a phosphate compound, a polyphosphate compound, and a metaphosphate compound, each of which contains an anion represented

by general formula (1):

[Chemical Formula 2]

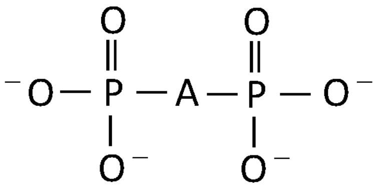

or

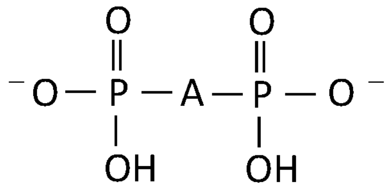

(1)

In formula (1), A represents an organic group or an oxygen atom.

The ion conductive phase can include at least one selected from the group consisting of a silicate phase, a silicon oxide phase, and carbon phase, for example. Hereinafter, at least one of a silicate phase and a silicon oxide phase may be also referred to as "silicon compound phase". Composite particles of silicate phases with silicon phases dispersed therein may be also referred to as "silicate phase-containing composite particles". Composite particles of silicon oxide phases with silicon phases dispersed therein may be also referred to as "silicon oxide phase-containing composite particles". Composite particles of carbon phases with silicon phases dispersed therein may be also referred to as "carbon phase-containing composite particles".

As a result of at least part of the surfaces of the composite particles (ion conductive phases) being covered with the coating layers containing the phosphate compound, the composite particles are protected from electrolytes, side reactions with the electrolyte are inhibited, and erosion of the ion conductive phases associated therewith is inhibited. Degradation of cycle characteristics of secondary batteries due to degradation of the composite particles caused by erosion can be suppressed.

As a result of the composite particles being covered with the coating layers containing the phosphate compound, the cycle characteristics are greatly improved. The detailed reasons thereof are unclear, but may be inferred as follows.

The phosphate compound contains an anion having a plurality of structures of $P(=O)O^-$ (PO structures). Such a phosphate compound can react with a decomposition product (e.g., HF) of the electrolyte to form a flexible polymer in the surface portions or inside of the coating layers. The coating layers containing such a polymer tend to follow expansion and contraction of the silicon-containing particles, and securely maintain a protective effect of the coating layers on the silicon-containing particles during charge-discharge cycles. In addition, particle isolation due to particle cracking is also reduced.

The phosphate compound, which has a plurality of PO structures, has excellent affinity with water and excellent dispersibility in water. When the phosphate compound is mixed with silicon-containing particles in a dispersed stated in water in wet mixing in the first step of the negative electrode material production method to be described later, the phosphate compound facilitates uniform covering of the surfaces of the silicon-containing particles with the phosphate compound, enhancing coating properties of the phosphate compound.

(Phosphate Compound)

The coating layers containing the phosphate compound have low resistance and good ion conductivity. The phosphate compounds can form a cation and an anion having the structures of $P(=O)O^-$ (also referred to as "PO structures"). The cation includes a metal ion or an ammonium ion ($NH_4^+$), for example. In the PO structures, the bond between P and O may be a single bond (P-O), a double bond (P=O), or an intermediate bond therebetween. When the coating layers contain the phosphate compound, a peak derived from the PO structures is observed through X-ray photoelectron spectroscopy (XPS).

Examples of metals that can form a cation in the phosphate compound include alkali metals, beryllium, magnesium, alkaline earth metals, transition metals, and aluminum. Examples of the alkali metals include sodium and potassium. Examples of the alkaline earth metals include calcium. Examples of the transition metals include iron, manganese, and nickel. The phosphate compound may be an inorganic phosphate compound or an organic phosphate compound.

The coating layers may contain at least one of a phosphate compound containing a cation and one of the anions represented by general formula (1), and a phosphate compound containing a cation and the other of the anions represented by general formula (1).

It is preferable that A in general formula (1) is an organic group and the organic group has a structure represented by formula (2):

[Chemical Formula 3]

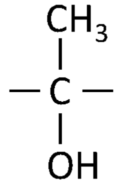

(2)

In this instance, the phosphate compound containing the anion represented by generic formula (1) is salt of etidronate. Examples of the salt of etidronate include disodium etidronate ($C_2H_6Na_2O_7P_2$) and tetrasodium etidronate ($C_2H_4Na_4O_7P_2$).

Examples of the phosphate compound containing an anion represented by general formula (1) in which A represents an organic group include salt of clodronate and salt of tiludronate, besides salt of etidronate.

A phosphate compound containing an anion represented by formula (1) in which A represents an oxygen atom is pyrophosphate. Examples of the pyrophosphate include sodium pyrophosphate ($Na_4P_2O_7$), potassium pyrophosphate ($K_4P_2O_7$), calcium pyrophosphate ($Ca_2P_2O_7$), and ferric pyrophosphate ($Fe_4(P_2O_7)_3$).

The polyphosphate compound contains at least one selected from the group consisting of tripolyphosphate and tetrapolyphosphate, for example. One example of the tripolyphosphate is sodium tripolyphosphate ($Na_5P_3O_{10}$). One example of the tetrapolyphosphate is sodium tetrapolyphosphate ($Na_6P_4O_{13}$).

The metaphosphate compound contains at least one selected from the group consisting of trimetaphosphate and hexametaphosphate, for example. Examples of the trimetaphosphate include sodium trimetaphosphate ($(NaPO_3)_3$) and potassium trimetaphosphate ($(KPO_3)_3$)). Examples of the hexametaphosphate include sodium hexametaphosphate ($(NaPO_3)_6$) and potassium hexametaphosphate ($(NaPO_3)_6$)).

From the point of view that a flexible polymer derived from the phosphate compound is easily formed in the coating layers and that the protective effect of the coating layers on the silicon-containing particle is more securely maintained during the charge-discharge cycles, salt of etidronate is preferable among these as the phosphate compound. Salt of etidronate is preferable also from the point of view of having many hydroxy groups, having good affinity with water, and further improving dispersibility in water.

The amount of the phosphate compound covering the surfaces of the composite particles (hereinafter, also referred to as the amount of the phosphate compound carried) may be 1 part by mass (or 2 parts by mass) or more relative to 100 parts by mass of the composite particles, and may be 1 part by mass or more and 10 parts by mass or less, or 5 parts by mass or more and 10 parts by mass or less.

When the amount of the phosphate compound carried is 1 part by mass or more, the surfaces of the composite particles can be sufficiently coated with the phosphate compound, and an effect of inhibiting side reactions induced by the phosphate compound can be easily obtained. The cycle characteristics are more likely to be improved as the amount of the phosphate compound carried is increased in a range of 1 part by mass or more and less 10 parts by mass or less. When the amount of the phosphate compound carried is 10 parts by mass or less, a low-resistance negative electrode material (coating layers) is easily obtained.

The amount of the phosphate compound carried (amount relative to 100 parts by mass of the composite particles) is determined by the following method.

The negative electrode material is washed with water to dissolve the phosphate compound. The mass of the phosphate compound dissolved in the water is determined by quantitative analysis such as inductively coupled plasma (ICP) emission spectrometry. The mass of the residue insoluble in the water is determined as the mass of the composite particles.

When the composite particles are silicon compound phase-containing composite particles with the conductive layers, quantitative analysis of carbon is performed on the residue insoluble in the water, for example, using a carbon-sulfur analyzer. The carbon of which amount is determined is derived from a carbon material in the conductive layers. The value obtained by subtracting the mass of the carbon determined through the analysis from the mass of the residue insoluble in the water is determined as the mass of the silicon compound phase-containing composite particles.

Based on the mass of the phosphate compound and the mass of the composite particles determined above, the amount of the phosphate compound carried is determined using (mass of phosphate compound/mass of composite particles) $\times$ 100.

Preferably, the thickness of the coating layers is so thin that it does not substantially affect the average particle diameter of the composite particles. In view of protecting the composite particles from liquid electrolytes, the thickness of the coating layers is preferably 1 nm or more. In view of suppressing an increase in resistance, the thickness of the coating

layers is preferably 300 nm or less. The thickness of the coating layers may be smaller than the thickness of the conductive layers described later. The thickness of the coating layers can be measured by observing a cross section of the composite particles using an electron microscope. A scanning electron microscope (SEM) or a transmission electron microscope (TEM) is used as the electron microscope.

The phosphate compound on the surface of the negative electrode material can be confirmed by time-of-flight secondary-ion-mass spectrometry (TOF-SIMS), for example. Ions derived from the phosphate compound are detected in the surface layer portion (including the outermost surfaces) of the coating layers.

(Conductive Layers)

In view of enhancing the conductivity, at least part of the surfaces of the composite particles may be covered with conductive layers containing a conductive carbon material. In this case, the conductive layers may be present between the composite particles and the coating layers. That is, the coating layers may be formed so as to cover the conductive layers on the surfaces of the composite particles. Preferably, the thickness of the conductive layers is so thin that it does not substantially affect the average particle diameter of the composite particles. In view of ensuring the conductivity, the thickness of the conductive layers is preferably 1 nm or more. In view of suppressing an increase in resistance, the total thickness of a coating layer and a conductive layer is preferably 300 nm or less. The thickness of the conductive layers can be measured by the same manner as that of the coating layers.

The conductive layers are formed by mixing a raw material of the conductive carbon material with the composite particles, followed by firing the resulting mixture to carbonize the raw material of the conductive carbon material. As the raw material of the conductive material, coal pitch or coal tar pitch, petroleum pitch, or phenolic resin can be used, for example. Firing of the mixture of the raw material of the conductive carbon material and the composite particles is performed in an inert atmosphere (e.g., an argon or nitrogen atmosphere), for example. Preferably, the firing temperature is 450°C or higher and 1000°C or lower. When the firing temperature is in the above temperature range, conductive layers having high conductivity can be easily formed on silicate phases having low crystallinity. The firing temperature is preferably 550°C or higher and 900°C or lower, and more preferably 650°C or higher and 850°C or lower. The firing time is 1 hour or more and 10 hours or less, for example.

(Composite Particles)

The composite particles each have a structure in which silicon phases are dispersed in an ion conductive phase (matrix). In the composite particles, the ion conductive phases relax stresses caused by expansion and contraction of the silicon phases during charging and discharging to reduce particle cracking as compared with a case where the negative electrode active material is constituted by pure Si particles or an Si-alloy particles. This suppresses a decrease in cycle characteristics due to particle isolation. Consequently, in the composite particles, it is possible to achieve both high capacity resulting from silicon containment and an improvement of the cycle characteristics.

The ion conductive phases may include silicon compound phases (at least one of silicate phases and silicon oxide phases), or may include carbon phases. The ion conductive phases may be constituted by a single type of phases or multiple types of phases.

The silicon oxide phases are constituted by a compound of Si and O. The main component of the silicon oxide phases (e.g., 95 to 100% by mass) may be silicon dioxide. The silicate phases are constituted by a compound containing a metal element, silicon (Si), and oxygen (O). The silicate phases preferably contain at least lithium silicate. In this case, entry and exit of lithium ions into and from the silicate phases are facilitated. Among the silicon oxide phases and the silicate phases, ones with silicate phases as a main component are preferable from the point of view of small irreversible capacity loss. Here, the "main component" refers to a component that accounts for 50% by mass or more of the total mass of the silicon compound phases. The main component may account for 70% by mass or more. It is possible that the ion conductive phases are constituted by silicon compound phases that include lithium silicate phases as a main component and a small amount of silicon oxide phases.

The composite particles may be composite particles (silicate phase-containing composite particles) including silicate phases and silicon phases dispersed in the silicate phases. The silicate phase-containing composite particles are obtained, for example, by pulverizing a mixture of silicate and raw silicon for micronization using a ball mill or the like under stirring, heat-treating the micronized mixture in an inert atmosphere, and pulverizing the sintered product obtained by the heat treatment.

The silicate phases preferably contain at least one of an alkali metal element (Group 1 element in the long form periodic table, other than hydrogen) and a Group 2 element in the long form periodic table. The alkali metal element includes lithium (Li), potassium (K), and sodium (Na), for example. The group 2 element includes magnesium (Mg), calcium (Ca), strontium (Sr), and barium (Ba), for example. The silicate phases may further contain another element, for example, a rare earth element such as lanthanum (La), or another element such as aluminum (Al) or boron (B).

Lithium silicate is a silicate containing lithium (Li), silicon (Si), and oxygen (O). The atomic ratio O/Si of O to Si in the lithium silicate is, for example, greater than 2 and less than 4 (z in the formula described later satisfies $0 < z < 2$). The ratio O/Si being greater than 2 and less than 4 is advantageous in lithium-ion conductivity and stability of the silicate phases. Preferably, the ratio O/Si is greater than 2 and 3 or less. The atomic ratio Li/Si of Li to Si in the lithium silicate is greater than 0 and less than 4, for example.

The composition of the lithium silicate can be represented by the following formula: $Li_{2z}SiO_{2+z}$ ($0 < z < 2$). From the point of view of, for example, stability, ease of production, and lithium-ion conductivity, z preferably satisfies $0 < z \leq 1$. The lithium silicate includes $Li_2Si_2O_5$ (z = 1/2) and $Li_2SiO_3$ (z = 1), for example.

The average particle diameter of the fine silicon phases (prior to initial charging) dispersed in the silicate phases may be 500 nm or less, 200 nm or more, or 50 nm or less. As a result of appropriate micronization of the silicon phases as above, volume change during charging and discharging is reduced, and structural stability is increased. Further, expansion and contraction of the silicon phases are made uniform to reduce particle cracking, thereby improving the cycle characteristics. The average particle diameter of the silicon phases is determined by observing a cross section of the negative electrode material using a SEM or a TEM. Specifically, it is determined by averaging the maximum diameters of any 100 silicon phases.

The silicon phases dispersed in the silicate phases each are a phase in the form of a particle of pure silicon (Si), and constituted by a single crystallite or a plurality of crystallites. The crystallite size of the silicon phases may be 5 nm or more and 50nm or less. When the crystallite size of the silicon phases is 50 nm or less, volume change due to expansion and contraction of the silicon particles associated with charging and discharging can be reduced, and the cycle characteristics can be further improved. The crystallite size of the silicon phases is calculated using Scherrer's equation based on the half-width of a diffraction peak attributed to the Si(111) plane in the X-ray diffraction (XRD) pattern.

In view of increasing the capacity and improving the cycle characteristics, the percentage content of the silicon phases in the silicate phase containing-composite particles may be 30% by mass or more and 90% or less by mass, or may be 35% by mass or more and 75% or less by mass.

The composition of the silicate phase containing-composite particles can be determined by any of the following analytical methods, for example.

<EDX>

From a cross-sectional image of a reflected electron image of a negative electrode mixture layer, 10 composite particles having a maximum particle diameter of 5 μm or more are randomly selected, and element mapping analysis by energy-dispersive X-ray (EDX) is performed on each of the selected particles. Image analysis software is used to calculate the area ratio of an element of interest. The observation magnification is preferably 2000× to 20000×. The measurement values of the area ratios of the specific element in the 10 particles are averaged. The content of the element of interest is calculated from the average obtained.

The following indicates desirable conditions for cross section measurement by SEM-EDX analysis.

<SEM-EDX Measurement Conditions>

Processing device: SM-09010 (Cross Section Polisher) produced by JEOL Ltd.
Processing condition: acceleration voltage of 6 kV
Current value: 140 μA
Degree of vacuum: $1 \times 10^{-3}$ to $2 \times 10^{-3}$ Pa
Measuring device: SU-70 produced by HITACHI, electron microscope
Acceleration Voltage during analysis: 10 kV
Field: free mode
Probe current mode: Medium
Probe current range: High
Anode Ap.: 3
OBJ Ap.: 2
Analysis area: 1 μm × 1 μm
Analytical software: EDAX Genesis
CPS: 20500
Lsec: 50
Time constant: 3.2

<AES>

From a cross-sectional image of a reflected electron image of a negative electrode mixture layer, 10 composite particles having a maximum particle diameter of 5 μm or more are randomly selected, and qualitative and quantitative analysis of an element is performed on each of the selected particles using an Auger electron spectroscopy (AES) analyzer (e.g., JAMP-9510F produced by JEOL Ltd.). The measurement conditions should include an acceleration voltage of 10 kV, a beam current of 10 nA, and an analysis region of 20 μmφ, for example. The content is calculated by averaging the contents of the predetermined element contained in the 10 particles.

In the course of charging and discharging, films are formed on the surfaces of the composite particles, for example, by electrolyte decomposition. As will be described later, the composite particles may further include conductive layers covering the surfaces of the composite particles. As such, mapping analysis by EDX or AES is performed in a range 1 micron inside the peripheral edge of the cross section of each composite particle so that the measurement range does not include the thin film and the conductive layer. The mapping analysis can also confirm the distribution state of the carbon material in the composite particles. It is preferable to measure the sample before cycling or in the initial cycling because the carbon material is difficult to distinguish from an electrolyte decomposition product in analysis at the end of cycling.

<ICP>

A sample of the composite particles is totally dissolved in a heated acid solution (mixed acid of hydrofluoric acid, nitric acid, and sulfuric acid), and the carbon residue in the solution is filtered off. The resulting filtrate is then analyzed by inductively coupled plasma-emission spectroscopy (ICP) to determine the spectral intensities of the respective elements. Next, a calibration curve is plotted using commercially available reference solutions of the elements to calculate the contents of the elements contained in the composite particles.

The contents of B, Na, K, and Al contained in the silicate phases can be quantitatively analyzed in accordance with JIS R3105(1995) (Methods for chemical analysis of borosilicate glasses).

The silicate phases and the silicon phases, which are present in the silicate phase-containing composite particles, can be quantified differently by Si-NMR. The Si content obtained in the above method is the sum of the content of Si constituting the silicon phases and the content of Si in the silicate phases. The amount of the Si element contained in the composite particles is distributed to the silicate phases and the silicon phases using the result of the quantitative analysis by Si-NMR. As the reference substance necessary for quantification, a mixture containing silicate phases and silicon phases, each with a known Si content, in a predetermined ratio can be used.

Desirable measurement conditions for Si-NMR are indicated below.

<Si-NMR Measurement Conditions>

Measuring device: solid-state nuclear magnetic resonance spectrum measuring device, INOVA-400 produced by Varian Medical Systems, Inc.
Probe: 7 mm, CPMAS-2 produced by Varian
MAS: 4.2 kHz
MAS speed: 4 kHz
Pulse: DD (45° pulse + signal capture time 1H decouple)
Repeat time: 1200 sec to 3000 sec
Observation width: 100 kHz
Observation center: around -100 ppm
Signal capture time: 0.05 sec
Accumulation times: 560
Sample amount: 207.6 mg

Hereinafter, an example of a production method for silicate phase-containing composite particles will be described in detail.

Step (i) (Step of Obtaining Lithium Silicate)

As a raw material of lithium silicate, a raw material mixture containing a raw material containing Si and a Li raw material in a predetermined ratio is used. Another element M may be contained in the raw material mixture as necessary. The mixture obtained by mixing predetermined amounts of the raw materials is dissolved, and the resulting melt is passed

through metal rolls to be flaked, thereby preparing lithium silicate. Thereafter, the flaked silicate is crystallized by heat treatment at a temperature higher than or equal to its glass transition point and lower than or equal to its melting point in an atmospheric atmosphere. The flaked silicate can be used directly without crystallization. Alternatively, the silicate can be produced through a solid-state reaction by firing the mixture with predetermined contents at a temperature lower than or equal to its melting point, without dissolution.

As the Si raw material, silicon oxide can be used. As the Li raw material, lithium carbonate, lithium oxide, lithium hydroxide, or lithium hydride can be used, for example. Any of these may be used singly or two or more of them may be used in combination. Examples of the raw material of the element M include oxides, hydroxides, carbonic acid compounds, hydrides, nitrates, and sulfuric acid salts of the element.

In the lithium silicate, the Si raw material that has not reacted with the Li raw material may remain. The remaining Si raw material is dispersed in the lithium silicate as fine crystals of silicon oxide.

Step (ii) (Step of Obtaining Silicate Composite Particles)

Next, the lithium silicate is blended with raw silicon for compounding. For example, composite particles are produced through the following steps (a) to (c).

Step (a)

First, a powder of raw silicon and a powder of lithium silicate are mixed at a mass ratio of, for example, 20:80 to 95:5. As the raw silicon, crude particles of silicon having an average particle diameter of about several micrometers to several tens of micrometers should be used.

Step (b)

Next, a pulverizing apparatus such as a ball mill is used to pulverize and compound the mixture of the raw silicon and the lithium silicate while micronizing the mixture. In doing so, an organic solvent may be added to the mixture for wet pulverization. A predetermined amount of the organic solvent may be charged into a pulverization vessel at a time in the beginning of pulverization, or a predetermined amount of the organic solvent may be intermittently charged into the pulverization vessel multiple times during the pulverization process. The organic solvent serves to prevent a pulverization target from adhering to the inner wall of the pulverization vessel.

As the organic solvent, any of alcohols, ethers, fatty acids, alkanes, cycloalkanes, silicate esters, and metal alkoxides can be used, for example.

As the raw silicon, crude particles of silicon having an average particle diameter of about several micrometers to several tens of micrometers should be used. The silicon particles finally obtained are preferably controlled so as to have a crystallite size, calculated using Scherrer's equation based on the half-width of a diffraction peak attributed to the Si(111) plane in the X-ray diffraction pattern, of 5 nm or more and 50 nm or less.

The raw silicon and the lithium silicate may be micronized separately and then mixed. Alternatively, silicon nano particles and amorphous lithium silicate nano particles may be prepared and mixed without using a pulverization apparatus. A known method such as a gas phase method (e.g., plasma method) or a liquid phase method (e.g., liquid phase reduction method) may be used for producing such nano particles.

Step (c)

Next, the pulverized product is fired while applying pressure, for example, by hot pressing to obtain a sintered product. Firing is performed, for example, in an inert atmosphere (e.g., an argon or nitrogen atmosphere). The firing temperature is preferably 450°C or higher and 1000°C or lower. When the firing temperature is within the above range, fine silicon particles can be easily dispersed in silicate phases having a low crystallinity. During sintering, the lithium silicate softens and flows to fill the gaps between the silicon particles. As a result, a dense block-shaped sintered product including silicate phases as sea portions and silicon particles as island portions can be obtained. The firing temperature is preferably 550°C or higher and 900°C or lower, and more preferably 650°C or higher and 850°C or lower. The firing time is 1 hour or more and 10 hours or less, for example.

The resulting sintered product is pulverized to give silicate composite particles. By appropriately selecting the pulverization conditions, silicate composite particles having a predetermined average particle diameter can be obtained.

Steps (i) and (ii) provide composite particles each including a silicate phase as a matrix and silicon phases dispersed in the matrix.

The composite particles may be composite particles (silicon oxide phase-containing composite particles) each including a silicon oxide phase and silicon phases dispersed in the silicon oxide phase. The silicon oxide phase-containing

composite particles are represented by formula $SiO_x$ ($0.5 \leq x < 1.6$), for example. The silicon oxide phase-containing composite particles are obtained, for example, by heat-treating silicon monoxide and separating the heat-treated silicon monoxide into silicon oxide phases and fine silicon phases by disproportionation.

The composite particles may be composite particles (carbon phase-containing composite particles) each including a carbon phase and silicon phases dispersed in the carbon phase. The carbon phase-containing composite particles are produced, for example, by pulverizing a mixture of a carbon source and raw silicon for micronization using a ball mill or the like under stirring, heat-treating the resulting mixture in an inert atmosphere, and then pulverizing the resulting sintered product. Examples of the carbon source include saccharides such as carboxymethylcellulose (CMC), water-soluble resins such as polyvinylpyrrolidone, petroleum pitch, and coal pitch.

Even if voids are formed around the carbon phase-containing composite particles, contact points between the composite particles and the surroundings thereof tend to be maintained since the carbon phases have conductivity. As a result, capacity decrease due to repetition of the charge-discharge cycles tends to be suppressed. The carbon phases may be constituted by formless carbon (i.e., amorphous carbon). The formless carbon may be a hard carbon, a soft carbon, or another carbon. The formless carbon (amorphous carbon) generally refers to as a carbon material having an average interplanar spacing d002 of the (002) planes, measured by X-ray diffractometry, of greater than 0.34 nm.

In view of increasing the capacity and improving the cycle characteristics, the percentage content of the silicon phases in the carbon phase-containing composite particles may be 30% by mass or more and 80% or less by mass, or may be 40% by mass or more and 70% or less by mass.

The average particle diameter of the composite particles is, for example, 1 μm or more and 25 μm or less, or may be 4 μm or more and 15 μm or less. In the above range, good battery performance is easily obtained. In the present description, the average particle diameter means a particle diameter (volume average particle diameter) in which the cumulative volume is 50% in a particle size distribution measured by the laser diffraction-scattering method. For example, "LA-750" produced by HORIBA, Ltd. can be used as the measuring device. However, the average particle diameter of the silicon phases dispersed in the ion conductive phases of the composite particles is determined by the method described above.

(Production Method for Negative Electrode Material for Secondary Battery Use)

One example of a production method for a negative electrode material for secondary battery use (a coating layer formation method) includes a first step of wet-mixing a phosphate compound and composite particles, followed by drying. The drying is preferably performed in an inert atmosphere. In the first step, the phosphate compound may be attached to the surfaces of the composite particles to form coating layers containing the phosphate compound.

The wet-mixing in the first step may be performed by adding a solvent (dispersion medium) to the phosphate compound, followed by stirring, and then adding the composite particles to the solution (dispersion liquid) of the phosphate compound, followed by stirring. As the solvent (dispersion medium), water or an alcohol can be used, for example. Among these, water is preferable. In this case, the surfaces of the composite particles are easily and uniformly coated with the phosphate compound.

The amount of the phosphate compound added may be 1 part by mass or more relative to 100 parts by mass of the composite particles, and may be 1 part by mass or more (or 2 parts by mass or more) and 10 parts by mass or less.

Another example of the production method for a negative electrode material may include the first step and the following second and third steps. The composite particles with the phosphate compound attached thereto obtained in the first step are used as a first intermediate.

Second step: The first intermediate is dry-mixed with fluorocarbon resin. In this way, a second intermediate (silicon-containing particles with the phosphate compound and the fluorocarbon resin attached thereto) is obtained.

Third step: The second intermediate is heat treated. In this way, coating layers are formed on the surfaces of the silicon-containing particles. Here, the coating layers contain the phosphate compound and the fluorocarbon resin, and the phosphate compound is firmly retained by the fluorocarbon resin.

The second step and the third step are preferably performed in an inert atmosphere.

Dry-mixing in the second step is performed using a ball mill, for example. The fluorocarbon resin in the second intermediate is liquified during heat treatment in the third step, and permeates and diffuses around the composite particles and the particles of phosphate compounds. This enhances retention of the phosphate compound on the surfaces of the composite particles. As a dispersion medium for negative electrode slurry use, water is used usually. In presence of the fluorocarbon resin, which has excellent binding properties and hydrophobicity, on the surface of the negative electrode material, dissolution of the phosphate compound into water is inhibited during negative electrode slurry preparation.

Examples of the fluorocarbon resin include polyvinylidene fluoride (PVDF) and polytetrafluoroethylene. Among these, PVDF is more preferable. PVDF has good binding properties and a low melting point, and can form coating layers at low heat treatment temperatures.

FIG. 1 schematically illustrates a cross section of a negative electrode material 20.

The negative electrode material 20 contains composite particles 23 (mother particles) and coating layers 26 covering the surfaces of the composite particles 23. Each of the composite particles 23 includes an ion conductive phase 21 and silicon phases (silicon particles) 22 dispersed in the ion conductive phase 21. The composite particle 23 has an island-in-sea configuration in which the fine silicon phases 22 are dispersed in the matrix of the ion conductive phase 21. The coating layers 26 contain a phosphate compound. The negative electrode material may contain another element besides the composite particles and the coating layers. For example, conductive layers may be provided between the composite particles and the coating layers.

(Secondary Battery)

A secondary battery according to an embodiment of present disclosure includes a positive electrode, a negative electrode, and an electrolyte. The negative electrode contains the negative electrode material for secondary battery use described above. The following describes the negative electrode and the like of the secondary battery.

[Negative Electrode]

The negative electrode contains a negative electrode active material capable of absorbing and releasing lithium ions. The negative electrode active material contains the negative electrode material (composite particles) described above. The silicon phases in the composite particles can absorb many lithium ions, which contributes to an increase in capacity of the negative electrode.

The negative electrode active material may further contain another material of an active material. As the other material of the active material, a carbon-based active material is preferable, for example. The volume of the composite particles expands and contracts with charging and discharging. Therefore, when the ratio thereof in the negative electrode active material increases, contact failure between the negative electrode active material and the negative electrode current collector is likely to occur with charging and discharging. However, combinational use of the composite particles and the carbon-based active material can achieve excellent cycle characteristics while imparting high capacity of the silicon phases to the negative electrode. The proportion of the composite particles to the sum of the composite particles and the carbon-based active material may be, for example, 0.5 to 15% by mass, or 1 to 5% by mass. This can facilitate achievement of both high capacity and improvement of the cycle characteristics.

Examples of the carbon-based active material include graphite, graphitizable carbon (soft carbon), and non-graphitizable carbon (hard carbon). Among these, graphite is preferable because of its excellent stability during charging and discharging and small irreversible capacity loss. Graphite means a material having a graphite-type crystal structure, examples of which include natural graphite, artificial graphite, and graphitized mesophase carbon particles. One carbon-based active material may be used singly, or two or more carbon-based active materials may be used in combination.

The negative electrode includes a negative electrode current collector and a negative electrode mixture layer carried on a surface of the negative electrode current collector, for example. The negative electrode mixture layer can be formed by applying a negative electrode slurry of a negative electrode mixture dispersed in a dispersion medium to the surface of the negative electrode current collector, followed by drying. The dried coated film may be rolled as necessary. The negative electrode mixture layer may be formed on one surface of the negative electrode current collector, or on both surfaces thereof.

The negative electrode mixture contains a negative electrode active material (the negative electrode material described above) as an essential component, and may contain, for example, a binder, a conductive agent, and a thickener as optional components.

Alternatively, the negative electrode mixture layer may be formed by applying a negative electrode slurry containing a negative electrode active material containing the composite particles, the phosphate compound, and, if necessary, a binder or the like to the surface of the negative electrode current collector, dried, and rolled as necessary. In the manner described above, the negative electrode material may be formed by attaching the phosphate compound to the surfaces of the composite particles in the process of negative electrode mixture layer formation.

As the negative electrode current collector, a non-perforated conductive substrate (e.g., a metal foil) or a perforated conductive substrate (e.g., a mesh body, a net body, or a punched sheet) is used. Examples of the material of the negative electrode current collector include stainless steel, nickel, nickel alloys, copper, and copper alloys. The thickness of the negative electrode current collector is not limited particularly. From the point of view of balance between strength and weight savings of the negative electrode, the thickness of the negative electrode current collector is preferably 1 to 50 $\mu$m, and more preferably 5 to 20 $\mu$m.

Examples of the binder include fluorocarbon resin, polyolefin resin, polyamide resin, polyimide resin, vinyl resin, styrene-butadiene copolymer rubber (SBR), and polyacrylic acid and a derivative thereof. Any of these may be used singly or two or more of them may be used in combination. Examples of the conductive agent include carbon black, conductive fibers, fluorinated carbon, and organic conductive materials. Any of these may be used singly or two or more of them may

be used in combination. Examples of the thickener include carboxymethylcellulose (CMC) and polyvinyl alcohols. Any of these may be used singly or two or more of them may be used in combination.

Examples of the dispersion medium include water, alcohols, ethers, N-methyl-2-pyrrolidone (NMP), and mixed solvents of these.

[Positive Electrode]

The positive electrode contains a positive electrode active material capable of absorbing and releasing lithium ions. As the positive electrode active material, a lithium transition metal composite oxide can be used, for example. Examples of the lithium transition metal composite oxide include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMePO_4$, and $Li_2MePO_4F$. Here, M represents at least one selected from the group consisting of Na, Mg, Sc, Y, Mn, Fe, Co, Ni, Cu, Zn, Al, Cr, Pb, Sb, and B. Me includes at least a transitional element (e.g., includes at least one selected from the group consisting of Mn, Fe, Co, and Ni). Here, $0 \leq a \leq 1.2$, $0 \leq b \leq 0.9$, and $2.0 \leq c \leq 2.3$ are satisfied. Note that the value "a" indicating the molar ratio of lithium is increased and decreased by charging and discharging.

The positive electrode includes a positive electrode current collector and a positive electrode mixture layer carried on a surface of the positive electrode current collector, for example. The positive electrode mixture layer can be formed by applying a positive electrode slurry of a positive electrode mixture dispersed in a dispersion medium to the surface of the positive electrode current collector, followed by drying. The dried coated film may be rolled as necessary. The positive electrode mixture layer may be formed on one surface of the positive electrode current collector, or may be formed on both surfaces thereof.

The positive electrode mixture contains a positive electrode active material as an essential component, and may contain, for example, a binder and a conductive agent as optional components.

As the binder and the conductive agent, ones similar to those exemplified for the negative electrode can be used. As the conductive agent, graphite such as natural graphite or artificial graphite may be used.

The shape and thickness of the positive electrode current collector can be selected from the shapes and ranges according to the negative electrode current collector, respectively. Examples of the material of the positive electrode current collector include stainless steel, aluminum, aluminum alloys, and titanium.

[Electrolyte]

The electrolyte has lithium-ion conductivity. The electrolyte may be a liquid electrolyte (electrolyte solution) or a solid-state electrolyte.

As the solid-state electrolyte, a solid-state or gel-state polymer electrolyte or a solid-state inorganic electrolyte can be used, for example. Examples of the solid-state inorganic electrolyte include materials (e.g., oxide-based solid-state electrolytes, sulfide-based solid-state electrolytes, and halogen-based solid-state electrolytes) known in the field of all-solid lithium-ion secondary batteries. The polymer electrolyte contains a lithium salt and a matrix polymer, or contains a nonaqueous solvent, a lithium salt, and a matrix polymer, for example. As the matrix polymer, a polymer material that gelates by absorbing a nonaqueous solvent is used, for example. Examples of the polymer material include fluorocarbon resins, acrylic resins, and polyether resins.

The liquid electrolyte contains a solvent and an electrolytic salt. As the solvent, a nonaqueous solvent may be used, or water may be used. In a case of a lithium-ion secondary battery, the electrolyte salt includes at least a lithium salt.

The concentration of the lithium salt in the liquid electrolyte is preferably 0.5 mol/L or more and 2 mol/L or less, for example. As a result of the lithium salt concentration being controlled within the above range, a liquid electrolyte having excellent ion conductivity and moderate viscosity can be obtained. However, the concentration of the lithium salt is not limited to the above.

Examples of the nonaqueous solvent include cyclic carbonic acid esters, chain carbonic acid esters, and cyclic carboxylic acid esters. Examples of the cyclic carbonic acid esters include propylene carbonate (PC) and ethylene carbonate (EC). Examples of the chain carbonic acid esters include diethyl carbonate (DEC), ethyl methyl carbonate (EMC), and dimethyl carbonate (DMC). Examples of the cyclic carboxylic acid esters include $\gamma$-butyrolactone (GBL) and $\gamma$-valerolactone (GVL). Any of the nonaqueous solvents may be used singly, or two or more of them may be used in combination.

Examples of the lithium salt that can be used include lithium salts of chlorine-containing acids (e.g., $LiClO_4$, $LiAlCl_4$, and $LiB_{10}Cl_{10}$), lithium salts of fluorine-containing acids (e.g., $LiPF_6$, $LiBF_4$, $LiSbF_6$, $LiAsF_6$, $LiCF_3SO_3$, and $LiCF_3CO_2$), lithium salts of fluorine-containing acid imides (e.g., $LiN(CF_3SO_2)_2$, $LiN(CF_3SO_2)(C_4F_9SO_2)$, and $LiN(C_2F_5SO_2)_2$), and lithium halides (e.g., LiCl, LiBr, and LiI). Any of the lithium salts may be used singly, or two or more of them may be used in combination.

[Separator]

Usually, it is desirable to provide a separator between the positive electrode and the negative electrode. The separator has excellent ion permeability and moderate mechanical strength and insulating properties. As the separator, a microporous thin film, a woven fabric, or a nonwoven fabric can be used, for example. As the material of the separator, polyolefin such as polypropylene or polyethylene may be used, for example.

One example of the configuration of the secondary battery is a configuration in which an electrode group of the positive electrode and the negative electrode wound with the separator therebetween and the electrolyte are housed in an outer casing. Alternatively, instead of such a wound electrode group, another form of the electrode group may be adopted, such as a stacked electrode group of the positive electrode and the negative electrode stacked via the separator. The secondary battery may be in any form, such as in cylindrical, prismatic, coin-shaped, button-shaped, or laminated.

With reference to FIG. 2, the configuration of a prismatic secondary battery will be described below as an example of the secondary battery according to the present disclosure. FIG. 2 is a schematic perspective view with a partial cutaway of a secondary battery according to an embodiment of the present disclosure.

The battery includes a bottomed prismatic battery case 4, and an electrode group 1 and a liquid electrolyte (not illustrated) housed in the battery case 4. The electrode group 1 includes a long strip-shaped negative electrode, a long strip-shaped positive electrode, and a separator provided therebetween for preventing direct contact therebetween. The electrode group 1 is formed by winding the negative electrode, the positive electrode, and the separator around a plate-shaped winding core and removing the winding core.

One end of a negative electrode lead 3 is attached to the negative electrode current collector, for example, by welding. The other end of the negative electrode lead 3 is electrically connected to a negative electrode terminal 6 provided on a sealing plate 5 via an insulating plate (not illustrated) made of resin. The negative electrode terminal 6 is insulated from the sealing plate 5 by a gasket 7 made of resin. One end of a positive electrode lead 2 is attached to the positive electrode current collector, for example, by welding. The other end of the positive electrode lead 2 is connected to the back surface of the sealing plate 5 via an insulating plate. That is, the positive electrode lead 2 is electrically connected to the battery case 4 serving also as a positive electrode terminal. The insulating plate separates the electrode group 1 and the sealing plate 5 and separates the negative electrode lead 3 and the battery case 4. The periphery of the sealing plate 5 is fitted to the open end of the battery case 4, and the fitting portion is laser welded. Thus, the opening of the battery case 4 is sealed with the sealing plate 5. An injection hole for the liquid electrolyte formed in the sealing plate 5 is closed by a sealing plug 8.

<Supplementary Notes>

According to the above description of the embodiment, the following techniques are disclosed.

(Technique 1)

A negative electrode material for secondary battery use including: silicon-containing particles; and coating layers covering at least part of surfaces of the silicon-containing particles, wherein

the silicon-containing particles each include an ion conductive phase and silicon phases dispersed in the ion conductive phase, and
the coating layers contains at least one phosphate compound selected from the group consisting of a phosphate compound, a polyphosphate compound, and a metaphosphate compound, each of which contains an anion represented by the aforementioned general formula (1),
where in the general formula (1), A represents an organic group or an oxygen atom.

(Technique 2)

The negative electrode material for secondary battery use according to Technique 1, wherein the ion conductive phase includes at least one selected from the group consisting of a silicate phase, a silicon oxide phase, and a carbon phase.

(Technique 3)

The negative electrode material for secondary battery use according to Technique 1 or 2, wherein the organic group is represented by the aforementioned formula (2).

(Technique 4)

The negative electrode material for secondary battery use according to any one of Techniques 1 to 3, wherein the polyphosphate compound contains at least one selected from the group consisting of tripolyphosphate and tetrapolyphosphate.

(Technique 5)

The negative electrode material for secondary battery use according to any one of Techniques 1 to 4, wherein the metaphosphate compound contains at least one selected from the group consisting of trimetaphosphate and hexametaphosphate.

(Technique 6)

The negative electrode material for secondary battery use according to any one of Techniques 1 to 5, wherein the at least one phosphate compound includes at least one selected from the group consisting of sodium tripolyphosphate, sodium tetrapolyphosphate, sodium trimetaphosphate, sodium hexametaphosphate, potassium trimetaphosphate, potassium hexametaphosphate, disodium etidronate, tetrasodium etidronate, sodium pyrophosphate, potassium pyrophosphate, calcium pyrophosphate, and ferric pyrophosphate.

(Technique 7)

The negative electrode material for secondary battery use according to any one of Techniques 1 to 6, wherein an amount of the at least one phosphate compound attached to the surfaces of the silicon-containing particles is 1 part by mass or more relative to 100 parts by mass of the silicon-containing particles.

(Technique 8)

The negative electrode material for secondary battery use according to any one of Techniques 1 to 7, wherein ions derived from the at least one phosphate compound are detected in surface layer portion of the coating layers by time-of-flight secondary ion mass spectrometry.

(Technique 9)

The negative electrode material for secondary battery use according to any one of Techniques 1 to 8, wherein conductive layers containing a conductive carbon material are present between the silicon-containing particles and the coating layers.

(Technique 10)

A secondary battery including a positive electrode, a negative electrode, and an electrolyte, wherein
the negative electrode contains the negative electrode material for secondary battery use according to any one of Techniques 1 to 9.

[Examples]

Hereinafter, the present disclosure will be described in detail using examples, but present disclosure is not limited to the following examples.

<Secondary Battery A1, A2, and B2 to B4>

(Composite Particle Preparation)

A mixture was obtained by mixing lithium carbonate ($Li_2CO_3$) as a Li raw material and silicon dioxide ($SiO_2$) as a Si raw material to achieve an atomic ratio Si/Li of 1.05. The mixture was fired at 800°C for 10 hours in an inert atmosphere to obtain lithium silicate ($Li_2Si_2O_5$). The resulting lithium silicate was pulverized to have an average particle diameter of 10 μm.

The pulverized lithium silicate and raw silicon (3N, average particle diameter 10 μm) were mixed at a mass ratio of

40:60. The resulting mixture was charged into a pot (SUS, volume: 500 mL) of a planetary ball mill (P-5 produced by Fritsch Japan Co., Ltd.). Then, 24 SUS balls (diametric 20 mm) were put in the pot, the lid was closed, and the mixture was pulverized at 200 rpm for 50 hours in an inert atmosphere.

Next, the resulting powdery mixture was taken out in an inert atmosphere, and fired at 600°C for 4 hours under pressure applied by a hot press in an inert atmosphere to obtain a sintered product of the mixture. The resulting sintered product of the mixture was pulverized and passed through a 40-micron mesh to obtain composite particles (silicate phase-containing composite particles). A sieve was then used to obtain composite particles having an average particle diameter of 10 μm.

The crystallite size of the silicon phases was 15 nm. The silicon phases were in the form of particles and had an average particle diameter of 20 nm. The main component of the silicate phases was $Li_2Si_2O_5$, and the percentage content of the silicon phases in the silicate phase-containing composite particles was 60% by mass.

(Conductive Layer Formation)

Thereafter, 100 parts by mass of the composite particles were mixed with 3 parts by mass of coal tar pitch, and the resulting mixture was fired at 800°C in an inert atmosphere to coat the surfaces of the composite particles with conductive carbon. In the manner described above, conductive layers were formed on the surfaces of the silicate phase-containing composite particles. The coverage of the conductive layers was 3% by mass relative to the sum of the composite particles and the conductive layers.

(Negative Electrode Material Preparation)

Pure water was added to a powder of any of the additives shown in Table 1, and stirred for 30 minutes. Thereafter, the composite particles with the conductive layers were further added to the resulting mixture, and the mixture was stirred for 30 minutes. Drying was then performed at 80°C for 12 hours to remove water. In the manner described above, composite particles (negative electrode material) each including a coating layer containing the additive and a conductive layer were obtained. A Homomixer (produced by PRIMIX Corporation) was used as the stirrer. The amount of the additive added relative to 100 parts by mass of the composite particles was as shown in Table 1.

(Negative Electrode Production).

Graphite and any of the negative electrode materials were mixed at a mass ratio of 90:10 for use as a negative electrode active material. To 97.5 parts by mass of the negative electrode active material, 1 part by mass of carboxymethyl cellulose and 1.5 parts by mass of styrene-butadiene rubber were added, and a predetermined amount of water was further added to prepare a negative electrode slurry.

The negative electrode slurry was applied to both surfaces of a copper foil being a negative electrode current collector, and the coated film was dried, rolled, and cut to a predetermined size. Thus, a negative electrode including a negative electrode mixture layer formed on both surfaces of the negative electrode current collector was obtained. At that time, a negative electrode current collector exposed portion was provided at a part of the negative electrode.

(Positive Electrode Production).

To 95 parts by mass of a positive electrode active material, 2.5 parts by mass of acetylene black, and 2.5 parts by mass of polyvinylidene fluoride were added, and an appropriate amount of N-methyl-2-pyrrolidone (NMP) was further added to prepare a positive electrode slurry. A lithium transition metal composite oxide represented by $LiNi_{0.88}Co_{0.09}Al_{0.03}O_2$ was used as the positive electrode active material.

The positive electrode slurry was applied to both surfaces of an aluminum foil being a positive electrode current collector, and the coated film was dried, rolled, and cut to a predetermined size. Thus, a positive electrode including a positive electrode mixture layer formed on both surfaces of the positive electrode current collector was obtained. At that time, a positive electrode current collector exposed portion was provided at a part of the positive electrode.

(Liquid Electrolyte Preparation)

Ethylene carbonate (EC), ethyl methyl carbonate (EMC), and dimethyl carbonate (DMC) were mixed at a volume ratio of 20:5:75 to obtain a mixed solvent. A liquid electrolyte was prepared by dissolving lithium hexafluoride phosphate at a concentration of 1 mol/liter in the mixed solvent.

(Secondary Battery Production)

An aluminum positive electrode lead was attached to the positive electrode current collector exposed portion of the positive electrode, and a nickel negative electrode lead was attached to the negative electrode current collector exposed portion of the negative electrode. The positive electrode and the negative electrode were spirally wound with a polyolefin separator therebetween, and then pressed radially to produce a flat wound electrode assembly. The electrode assembly was housed in an outer casing constituted by an aluminum laminate sheet. After the liquid electrolyte was injected, the opening of the outer casing was sealed. In the manner described above, secondary batteries A1, A2, B2 to B4, and B6 for evaluation were obtained.

<<Secondary Battery B1>>

A secondary battery B1 was obtained in the same manner as the secondary battery A1, except that no coating layers were formed on the surfaces of the composite particles including the conductive layers.

<<Secondary Battery B5>>

Pure Si particles (average particle diameter 10 μm) were used in place of the composite particles. No conductive layers were formed on the surfaces of the pure Si particles. A secondary battery B5 was obtained in the same manner as the secondary battery A1, except that the pure Si particles were used in place of the silicate phase-containing composite particles with the conductive layers in the negative electrode material preparation.

Each of the secondary batteries A1, A2 and B1 to B5 obtained above were evaluated as follows.

[Evaluation: Cycle Degradation Ratio]

In an environment at 25°C, constant current charging was performed with a current of 0.3 C until the voltage reached 4.2 V, and constant voltage charging was performed then at a voltage of 4.2 V until the current reached 0.02 C. Thereafter, discharging with a current of 0.5C was performed until the voltage reached 2.5 V The above charging-discharging process was performed for one cycle, repeated 300 times.

Based on a discharge capacity C1 at the first cycle and a discharge capacity C2 at the 300th cycle, a discharge capacity retention rate R (%) was obtained using the following equation.

Discharge capacity retention rate R = (discharge capacity C2/discharge capacity C1) × 100

The cycle degradation rate at the 300th cycle was obtained based on the obtained discharge capacity retention rate R using the following equation. A lower cycle degradation rate indicates better cycle characteristics. Note that R0 in the equation represents the discharging capacity retention rate R of the secondary battery B1 of Comparative Example 1.

$$\text{Cycle degradation rate} = \{(100 - R)/(100 - R0)\} \times 100$$

The evaluation results are shown in Table 1. In Table 1, A1 and A2 are batteries of Examples, and B1 to B5 are batteries of Comparative Examples.

[Table 1]

| Secondary battery | Si-based active material | Coating layer | | Cycle degradation rate at 300$^{th}$ cycle |
|---|---|---|---|---|
| | | Additive | Amount added (part by mass) | |
| A1 | Silicate phase-containing composite particles | Disodium etidronate | 5 | 89.6 |
| A2 | Silicate phase-containing composite particles | Disodium etidronate | 10 | 74.9 |
| B1 | Silicate phase-containing composite particles | - | - | 100 |
| B2 | Silicate phase-containing composite particles | Sodium stearate | 5 | 183.4 |
| B3 | Silicate phase-containing composite particles | Sodium polyacrylate | 6 | 100.9 |

(continued)

| Secondary battery | Si-based active material | Coating layer | | Cycle degradation rate at 300th cycle |
|---|---|---|---|---|
| | | Additive | Amount added (part by mass) | |
| B4 | Silicate phase-containing composite particles | Polyvinylidene fluoride | 5 | 97.5 |
| B5 | Si particles | Disodium etidronate | 5 | 93.7 |

In the secondary batteries A1 and A2, the cycle degradation rates were lower than those of the secondary batteries B1 to B5, resulting in excellent cycle characteristics.

<<Secondary Battery B6>>

A secondary battery B6 was obtained in the same manner as the secondary battery A1, except that lithium phosphate was used as the additive in the negative electrode production.

The secondary batteries A1, B1, and B6 were evaluated in the same manner as described above to obtain the cycle degradation rates thereof at 350th cycle. The discharge capacity at the 350th cycle was used as C2 in the equation for calculating the discharge capacity retention rate R.

The evaluation results are shown in Table 2. In Table 2, A1 indicates a battery of Example, and B1 and B6 indicate batteries of Comparative Examples.

[Table 2]

| Secondary battery | Si-based active material | Coating layer | | Cycle degradation rate at 350th cycle |
|---|---|---|---|---|
| | | Additive | Amount added (part by mass) | |
| A1 | Silicate phase-containing composite particles | Disodium etidronate | 5 | 90.5 |
| B1 | Silicate phase-containing composite particles | - | - | 100 |
| B6 | Silicate phase-containing composite particles | Lithium phosphate | 5 | 97.5 |

In the secondary battery A1, the cycle degradation rate was lower than those of the secondary batteries B1 and B6, resulting in excellent cycle characteristics.

<<Secondary Batteries C1, C2, and D1>>

Carbon phase-containing composite particles were used as the composite particles. The carbon phase-containing composite particles were produced as follows.

Coal pitch (MCP250 produced by JFE Chemical Corporation) being a carbon source and raw silicon (3N, average particle diameter 10 μm) were mixed at a mass ratio of 50:50. The resulting mixture was charged into a pot (SUS, volume: 500 mL) of a planetary ball mill (P-5 produced by Fritsch Japan Co., Ltd.), 24 SUS balls (diameter 20 mm) were put in the pot, and the lid was closed. The mixture was pulverized at 200 rpm for 50 hours in an inert atmosphere to obtain a composite of silicon phases and the carbon source.

Next, the composite of the silicon phases and the carbon source was fired in an inert gas atmosphere to carbonize the carbon source, thereby obtaining a sintered product in which the silicon phases were dispersed in the carbon phases containing formless carbon. The sintered product was then pulverized using a jet mill to obtain carbon phase-containing composite particles having an average particle diameter of 10 μm.

The crystallite size of the silicon phases was 15 nm. The silicon phases were in the form of particles and the average particle diameter of the silicon phases was 20 nm. The percentage content of the silicon phases in the carbon phase-containing composite particles was 60% by mass.

No conductive layers were formed on the surfaces of the carbon phase-containing composite particles. Secondary batteries C1 and C2 were obtained in the same manner as the secondary batteries A1 and A2, except that

the carbon phase-containing composite particles were used in the negative electrode production, in place of the silicate phase-containing composite particles with the conductive layers. A secondary battery D1 was produced in the same manner as the secondary battery B1 except the above.

The secondary batteries obtained above were evaluated in the same manner as described above. The discharge capacity retention rate R of the secondary battery D1 was used as R0 in the equation for calculating the cycle degradation rate.

The evaluation results are shown in Table 3. In Table 3, C1 and C2 are batteries of Examples, and D1 is a battery of Comparative Example.

[Table 3]

| Secondary battery | Si-based active material | Coating layer | | Cycle degradation rate at 300th cycle |
|---|---|---|---|---|
| | | Additive | Amount added (part by mass) | |
| C1 | Carbon phase-containing composite particles | Disodium etidronate | 5 | 96.9 |
| C2 | Carbon phase-containing composite particles | Disodium etidronate | 10 | 94.8 |
| D1 | Carbon phase-containing composite particles | - | - | 100 |

In the secondary batteries C1 and C2, the cycle degradation rates were lower than that of the secondary battery D1, resulting in excellent cycle characteristics.

[Industrial Applicability]

The secondary battery according to the present disclosure is useful as a main power source of a mobile communication device or a portable electronic device, for example.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

[Reference Signs List]

1: electrode group, 2: positive electrode lead, 3: negative electrode lead, 4: battery case, 5: sealing plate, 6: negative electrode terminal, 7: gasket, 8: sealing plug, 20: negative electrode material, 21: ion conductive phase, 22: silicon phase, 23: composite particle, 26: coating layer

## Claims

**1.** A negative electrode material for secondary battery use comprising:

silicon-containing particles; and
coating layers covering at least part of surfaces of the silicon-containing particles, wherein
the silicon-containing particles each include an ion conductive phase and silicon phases dispersed in the ion conductive phase, and
the coating layers contains at least one phosphate compound selected from the group consisting of a phosphate compound, a polyphosphate compound, and a metaphosphate compound, each of which contains an anion represented by general formula (1):

[Chemical Formula 1]

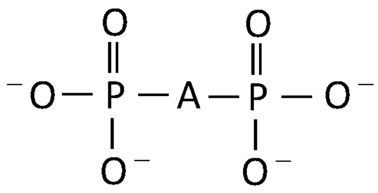

or

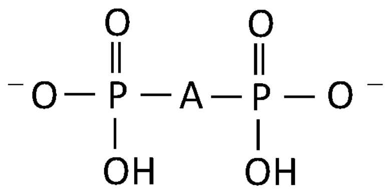

(1)

,

where in the general formula (1), A represents an organic group or an oxygen atom.

**2.** The negative electrode material for secondary battery use according to claim 1, wherein
the ion conductive phase includes at least one selected from the group consisting of a silicate phase, a silicon oxide phase, and a carbon phase.

**3.** The negative electrode material for secondary battery use according to claim 1, wherein
the organic group is represented by formula (2):

[Chemical Formula 2]

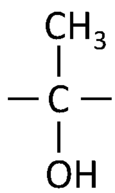

(2)

.

**4.** The negative electrode material for secondary battery use according to claim 1, wherein
the polyphosphate compound contains at least one selected from the group consisting of tripolyphosphate and tetrapolyphosphate.

**5.** The negative electrode material for secondary battery use according to claim 1, wherein
the metaphosphate compound contains at least one selected from the group consisting of trimetaphosphate and hexametaphosphate.

**6.** The negative electrode material for secondary battery use according to claim 1, wherein
the at least one phosphate compound includes at least one selected from the group consisting of sodium tripolyphosphate, sodium tetrapolyphosphate, sodium trimetaphosphate, sodium hexametaphosphate, potassium trimetaphosphate, potassium hexametaphosphate, disodium etidronate, tetrasodium etidronate, sodium pyrophosphate, potassium pyrophosphate, calcium pyrophosphate, and ferric pyrophosphate.

**7.** The negative electrode material for secondary battery use according to claim 1, wherein
an amount of the at least one phosphate compound attached to the surfaces of the silicon-containing particles is 1 part by mass or more relative to 100 parts by mass of the silicon-containing particles.

**8.** The negative electrode material for secondary battery use according to claim 1, wherein
ions derived from the at least one phosphate compound are detected in surface layer portion of the coating layers by time-of-flight secondary ion mass spectrometry.

**9.** The negative electrode material for secondary battery use according to claim 1, wherein
conductive layers containing a conductive carbon material are present between the silicon-containing particles and the coating layers.

**10.** A secondary battery comprising:

a positive electrode;
a negative electrode; and
an electrolyte, wherein
the negative electrode contains the negative electrode material for secondary battery use according to claim 1.

FIG. 1

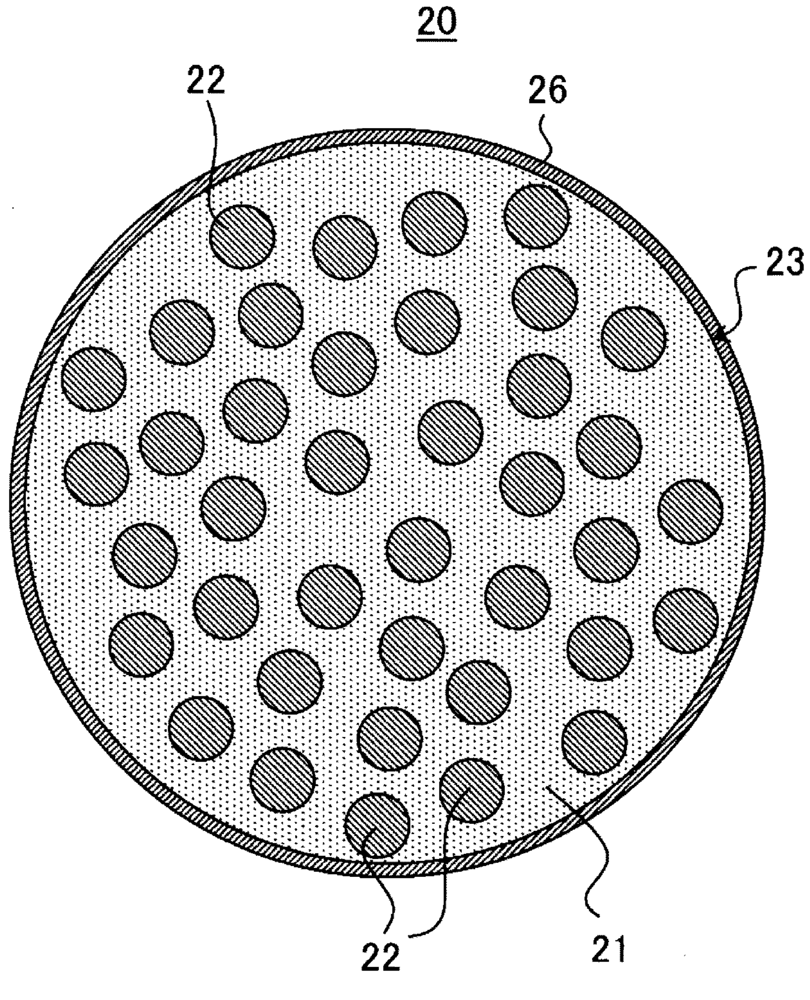

FIG. 2

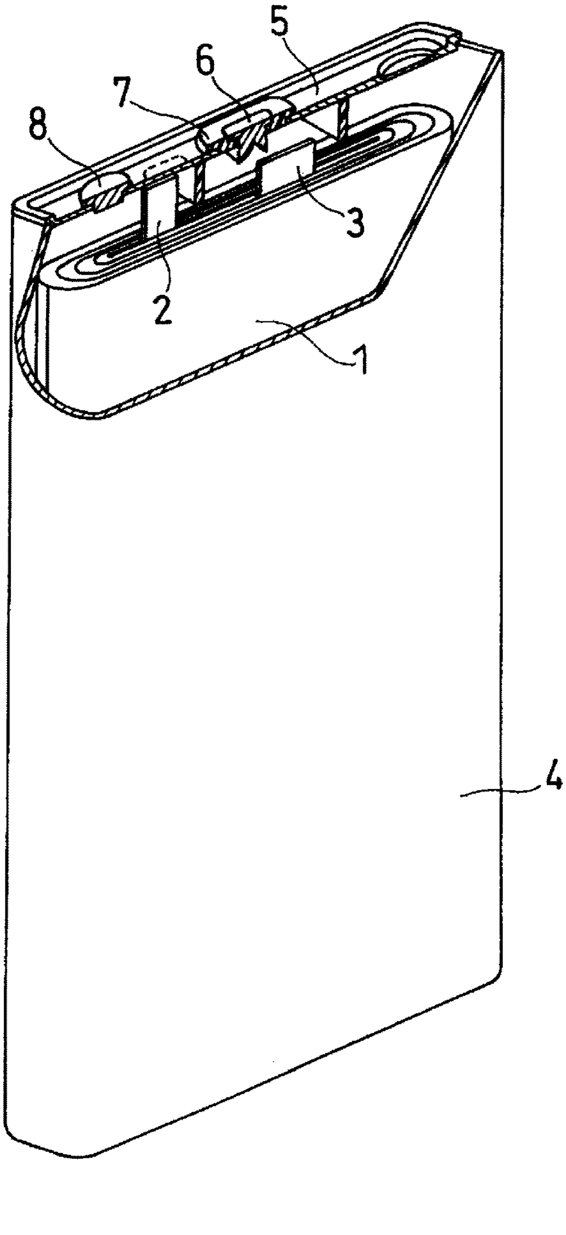

**INTERNATIONAL SEARCH REPORT**

International application No.
**PCT/JP2023/033412**

**A. CLASSIFICATION OF SUBJECT MATTER**

***H01M 4/38***(2006.01)i; ***H01M 4/36***(2006.01)i
FI: H01M4/38 Z; H01M4/36 A; H01M4/36 C

According to International Patent Classification (IPC) or to both national classification and IPC

**B. FIELDS SEARCHED**

Minimum documentation searched (classification system followed by classification symbols)

H01M4/38; H01M4/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-505312 A (ZHONGNENG ZHONGKE TIANJIN NEW ENERGY TECHNOLOGY CO., LTD.) 20 February 2020 (2020-02-20) | 1-10 |
| A | WO 2021/235505 A1 (MITSUBISHI CHEMICAL CORP.) 25 November 2021 (2021-11-25) | 1-10 |
| A | JP 2022-532110 A (LG CHEM, LTD.) 13 July 2022 (2022-07-13) | 1-10 |
| A | WO 2016/088837 A1 (NEC CORP.) 09 June 2016 (2016-06-09) | 1-10 |
| A | JP 2021-157925 A (TDK CORP.) 07 October 2021 (2021-10-07) | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/033412**

| Patent document cited in search report | Publication date (day/month/year) | Patent family member(s) | Publication date (day/month/year) |
|---|---|---|---|
| JP 2020-505312 A | 20 February 2020 | US 2019/0372123 A1 | |
| | | WO 2019/019411 A1 | |
| | | EP 3660962 A1 | |
| | | CN 109309200 A | |
| | | KR 10-2019-0099522 A | |
| WO 2021/235505 A1 | 25 November 2021 | US 2023/0127105 A1 | |
| | | EP 4156366 A1 | |
| | | CN 115668570 A | |
| | | KR 10-2023-0012607 A | |
| JP 2022-532110 A | 13 July 2022 | US 2022/0263073 A1 | |
| | | WO 2021/101281 A1 | |
| | | EP 3943452 A1 | |
| | | KR 10-2021-0063247 A | |
| | | CN 113795464 A | |
| WO 2016/088837 A1 | 09 June 2016 | (Family: none) | |
| JP 2021-157925 A | 07 October 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019151016 A
- WO 2019151026 A